# EUROPEAN PATENT APPLICATION

(11) **EP 2 851 782 A2**
(43) Date of publication of application: **25.03.2015**
(21) Application number: 14196558.2
(22) Date of filing: 02.04.2013
(51) Int. Cl.: G06F 3/0488

(54) **Touch-based method and apparatus for sending information**

(30) Priority: 29.03.2012 CN 201210087560
(62) Divisional of application: 13161934.8
(71) Applicant: Huawei Device Co., Ltd., Longgang District Shenzhen Guangdong 518129 (CN)
(72) Inventor: Jiang, Wenhe, 518129 Shenzhen Guangdong (CN)
(74) Representative: Maiwald Patentanwalts GmbH

(57) **Abstract**

Embodiments of the present invention provide a touch-based method and apparatus for sending information. The method includes: obtaining input information, which is input by a source user through an information input area preset on a display screen; and when preset gesture information is received, sending the input information to a target user corresponding to the gesture information. The embodiments of the present invention improve the existing information sending manner while inputting, and compared with the prior art, when sending information, require no touch or tap operation to select a recipient and send button and the like, but instead, send information quickly by using a preset convenient gesture, thereby improving performance of sending information instantly. In addition, because the preset gesture is convenient for inputting, user experience may be improved when a user sends information on a touch apparatus.

## Description

### FIELD OF THE INVENTION

The present invention relates to the field of communications technologies, and in particular, to a touch-based method and apparatus for sending information.

### BACKGROUND OF THE INVENTION

In the prior art, touch smart phones have been widely applied. Normally, a communication mode used in a smart phone is consistent with a communication mode used in a conventional PC (Personal Computer). Taking instant communication between users A and B as an example, the user A needs to start a dialog application program on a smart phone by touching, and after selecting the user B as an information recipient, tap a virtual send button to send instant information to the user B; similarly, the user A, when sending a short message to the user B, also needs to perform a series of touch operations and finally tap the send button to send the short message.

It is found that when the existing touch manner is used for sending information, the conventional information sending manner needs to be used. This information sending manner requires a series of complicated touch input operations such as starting an application, selecting a recipient, and tapping a send button. Therefore, the performance of sending information instantly is poor, and information cannot be sent conveniently on a terminal device such as a smart phone, resulting in poor user experience.

### SUMMARY OF THE INVENTION

Embodiments of the present invention provide a touch-based method and apparatus for sending information, so as to solve the problem of poor performance of sending information instantly in the prior art.

In one aspect, a touch-based method for sending information is provided, including:
obtaining input information, which is input by a source user through an information input area preset on a display screen; and
when preset gesture information is received, sending the input information to a target user corresponding to the gesture information.

In another aspect, a touch-based apparatus for sending information is provided, including:
an obtaining unit, configured to obtain input information, which is input by a source user through an information input area preset on a display screen; and
a sending unit, configured to: when preset gesture information is received, send the input information to a target user corresponding to the gesture information.

It can be seen from the embodiments that, in the embodiments of the present invention, input information, which is input by a source user through an information input area preset on a display screen, is obtained, and when preset gesture information is received, the input information is sent to a target user corresponding to the gesture information. The embodiments of the present invention improve the existing information sending manner while inputting, and compared with the prior art, require no touch or tap operation to select a recipient and send button and the like when sending information, but instead, send information quickly by using a preset convenient gesture, thereby improving performance of sending information instantly.

Embodiments of the invention may be described as follows:
According to a first embodiment, a touch-based method for sending information is provided, comprising:
   obtaining input information, which is input by a source user through an information input area preset on a display screen; and
   when preset gesture information is received, sending the input information to a target user corresponding to the gesture information.

According to a second embodiment, the method according to the first embodiment comprises, before the obtaining the input information, which is input by the source user through the preset information input area preset on the display screen: entering an information sending mode according to a selection operation of the source user.

According to a third embodiment, the method according to the second embodiment further comprises: when the information sending mode is an instant communication mode, displaying an icon of at least one user in an instant communication user list on the display screen according to a selection of the source user.

According to a fourth embodiment, the method according to the third embodiment comprises: when the preset gesture information is received, sending the input information to the target user corresponding to the gesture information comprises:
if the received gesture information is a flick gesture from the information input area to an icon of a user, sending the input information to the target user by taking a user corresponding to the icon of the user as the target user;

Or if the received gesture information is multi-point touch extension by using the information input area as a center, sending the input information to target users by taking all users corresponding to the icons on the display screen as the target users.

According to a fifth embodiment, the method according to one of the second to fourth embodiment comprises: when the information sending mode is a short message sending mode, the when the preset gesture information is received, sending the input information to the target user corresponding to the gesture information comprises:
if the received gesture information is a flick gesture from the information input area toward a preset direction, sending the input information to a target user by taking a user in the direction selected to receive a short message as the target user.

According to a sixth embodiment, the method according to one of the second to fifth embodiment comprises: when the information sending mode is a short message sending mode, the when the preset gesture information is received, sending the input information to the target user corresponding to the gesture information comprises:
if the received gesture information is multi-point touch extension by using the information input area as a center, sending the input information to target users by taking all users in an address book as the target users.

According to a seventh embodiment, the method according to one of the second to sixth embodiment comprises: when the preset gesture information is received, sending the input information to the target user comprises:
when the received gesture information is gesture information defined corresponding to a group including users, sending the input information to each user in the group, wherein the group including the users and the gesture information defined corresponding to the group are created and stored in advance.

According to an eighth embodiment, a touch-based apparatus for sending information is provided, comprising:
an obtaining unit, configured to obtain input information, which is input by a source user through an information input area preset on a display screen; and
a sending unit, configured to: when preset gesture information is received, send the input information to a target user corresponding to the gesture information.

According to a ninth embodiment, the apparatus according to the eighth embodiment comprises:
an entering unit, configured to enter an information sending mode according to a selection operation of the source user.

According to a tenth embodiment, the apparatus according to the ninth embodiment comprises:
a displaying unit, configured to display, according to a selection of the source user, an icon of at least one user in an instant communication user list on the display screen when the entering unit enters an instant communication mode.

According to an eleventh embodiment, the apparatus according to the tenth embodiment comprises:
a first send-executing subunit, configured to: if the received gesture information is a flick gesture from the information input area to an icon of a user, send the input information to the target user by taking a user corresponding to the icon of the user as the target user.

According to a twelfth embodiment, the sending unit of the apparatus according to the tenth or eleventh embodiment comprises:
a second send-executing subunit, configured to: if the received gesture information is multi-point touch extension by using the information input area as a center, send the input information to target users by taking all users corresponding to the icons on the display screen as the target users.

According to a thirteenth embodiment, the sending unit of the apparatus according to one of the ninth to twelfth embodiment comprises:
a third send-executing subunit, configured to: when the information sending mode is a short message sending mode, if the received gesture information is a flick gesture from the information input area toward a preset direction, send the input information to the target user in the direction by taking a user selected to receive a short message as the target user.

According to a fourteenth embodiment, the sending unit of the apparatus according to one of the ninth to thirteenth embodiment comprises:
a fourth send-executing subunit, configured to: when the information sending mode is a short message sending mode, if the received gesture information is multi-point touch extension by using the information input area as a center, send the input information to target users by taking all users in an address book as the target users.

According to a fifteenth embodiment, the apparatus according to one of the ninth to fourteenth embodiment comprises:
a storing unit, configured to store a group including users created in advance, and gesture information defined corresponding to the group, wherein
the sending unit comprises:
   a group information sending subunit, configured to send the input information to each user in the group when the received gesture information is the gesture information defined corresponding to the group.

### BRIEF DESCRIPTION OF THE DRAWINGS

To describe the technical solutions in the embodiments of the present invention more clearly, the accompanying drawings required for describing the embodiments are briefly introduced in the following. Apparently, persons of ordinary skill in the art may still derive other drawings from these accompanying drawings without creative efforts.
FIG. 1 is a flowchart of a first embodiment of a touch-based method for sending information according to the present invention;
FIG. 2A is a flowchart of a second embodiment of the touch-based method for sending information according to the present invention;
FIG. 2B is a schematic diagram of a display screen applying the method for sending information in FIG. 2A;
FIG. 3A is a flowchart of a third embodiment of the touch-based method for sending information according to the present invention;
FIG. 3B is a schematic diagram of a display screen applying the method for sending information in FIG. 3A;
FIG. 4A is a flowchart of a fourth embodiment of the touch-based method for sending information according to the present invention;
FIG. 4B is a schematic diagram of a display screen applying the method for sending information in FIG. 4A;
FIG. 5A is a flowchart of a fifth embodiment of the touch-based method for sending information according to the present invention;
FIG. 5B is a schematic diagram of a display screen applying the method for sending information in FIG. 5A;
FIG. 6A is a flowchart of a sixth embodiment of the touch-based method for sending information according to the present invention;
FIG. 6B is a schematic diagram of a display screen applying the method for sending information in FIG. 6A;
FIG. 7 is a block diagram of a first embodiment of a touch-based apparatus for sending information according to the present invention;
FIG. 8 is a block diagram of a second embodiment of the touch-based apparatus for sending information according to the present invention;
FIG. 9 is a block diagram of a third embodiment of the touch-based apparatus for sending information according to the present invention; and
FIG. 10 is a block diagram of a fourth embodiment of the touch-based apparatus for sending information according to the present invention.

### DETAILED DESCRIPTION OF THE EMBODIMENTS

The following embodiments of the present invention provide a touch-based method and apparatus for sending information.

In order to enable persons skilled in the art to have a better understanding of technical solutions in the embodiments of the present invention and make the objectives, features, and advantages of the embodiments of the present invention more comprehensible, the following describes the technical solutions in the embodiments of the present invention are in detail with reference to the accompanying drawings.

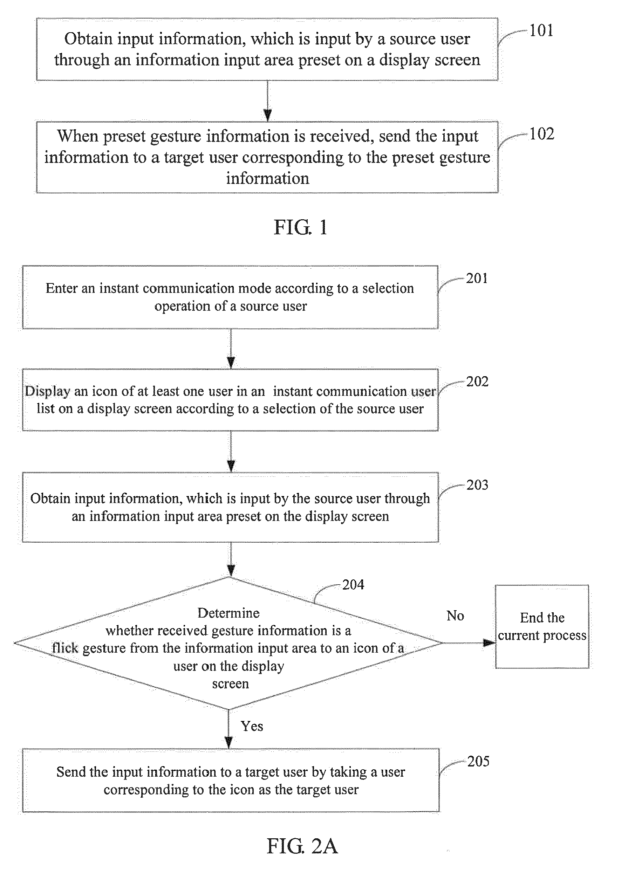

FIG. 1 is a flowchart of a first embodiment of a touch-based method for sending information according to the present invention.

Step 101: Obtain input information, which is input by a source user through an information input area preset on a display screen.

In the embodiment of the present invention, the information sent in the touch-based method for sending information may be information in an instant communication mode, or information in a short message sending mode. Input information may be information input in a touch manner, or information input by keyboard operations. The information may be text information input in real time, or file information stored before, such as a word file, image information, video information, and the like. The embodiment of the present invention sets no limitation to the information inputting manner or specific types of the information. In order to make improvements on the disadvantage of requiring a series of complicated touch input operations such as starting an application, selecting a recipient, and tapping a send button when sending information in the prior art, after an information sending mode is selected, an information input area may be set on a display screen. For example, a text box is set in the center of the display screen, and a user may perform input operations in the information input area, including inputting text information or inputting existing file information.

Step 102: When preset gesture information is received, send the input information to a target user corresponding to the preset gesture information.

In the embodiment of the present invention, different gestures may be defined in advance corresponding to different information sending modes, where each gesture describes a corresponding target user thereof. When a source user performs a gesture operation on the display screen and the corresponding touch track satisfies the preset gesture information, input information may be directly sent to the corresponding target user. In the following embodiments, the process of sending information will be described in detail respectively for different information sending modes and specific gestures defined, and will not be described herein.

It can be seen from the above embodiment that, the embodiment improves the existing information sending manner for a touch terminal, and compared with the prior art, when sending information, requires no touch or tap operation to select a recipient and send button and the like, but instead, sends information quickly by using a preset convenient gesture, thereby improving performance of sending information instantly. In addition, because the preset gesture is convenient for inputting, user experience may be improved when a user sends information on a touch apparatus.

FIG. 2A is a flowchart of a second embodiment of the touch-based method for sending information according to the present invention. This embodiment describes in detail a process of sending information when an instant communication mode is used.

Step 201: Enter an instant communication mode according to a selection operation of a source user.

The source user is a user using a current touch terminal device.

Step 202: Display an icon of at least one user in an instant communication user list on a display screen according to a selection of the source user.

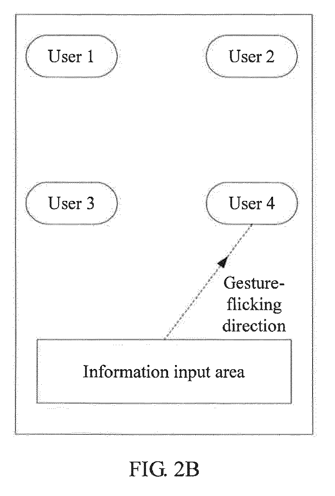

When selecting the instant communication mode, the source user may drag frequently- contacted users to the display screen. For example, as shown in FIG. 2B, four frequently-contacted users are dragged and displayed on the display screen. A user 1, a user 2, a user 3, and a user 4 are displayed in the form of icons in an upper area above an information input area, which are respectively located on the upper left, upper right, lower left, and lower right; or the icons of the frequently- contacted users may also be displayed on one side of the display screen and be arranged from the top down. Further, to keep the interface of the display screen in order, the above user icons may be hidden until the user performs an information sending operation.

Step 203: Obtain input information, which is input by the source user through an information input area preset on the display screen.

In the embodiment of the present invention, an information input area may be set on the display screen. For example, a text box is set in the lower part of the display screen, as shown in FIG. 2B. The user may perform input operations in the information input area.

Step 204: Determine whether received gesture information is a flick gesture from the information input area to an icon of a user on the display screen; if yes, perform step 205; otherwise, end the current process.

In the embodiment of the present invention, the described flick operation performed on the touch terminal is different in a common sliding operation. For example, the touch display screen has two points A and B. Sliding is defined as a movement process from the point A to the point B by a finger without leaving the display screen; flicking is defined as moving a finger from the point A to a point C on a line segment connecting the point A and the point B on the display screen (where the point C is close to the point A), and lifting the finger from the display screen between the point C and the point B.

Step 205: Send the input information to a target user by taking a user corresponding to the icon as the target user.

As shown in FIG. 2B, it is assumed that the source user wants to send the input information to the user 4. After information inputting is completed and after a finger presses and holds any point in the input box, the source user flicks in a direction toward the user 4, thereby triggering the terminal to automatically send the information to the user 4. It should be noted that in the embodiment of the present invention, whether the flick gesture is directed to an icon of a user may be determined by determining whether an extension line of a mapped track of the gesture can reach an area where the icon of the target user is located; if yes, it indicates that the gesture information satisfies the flick gesture to the icon of the target user.

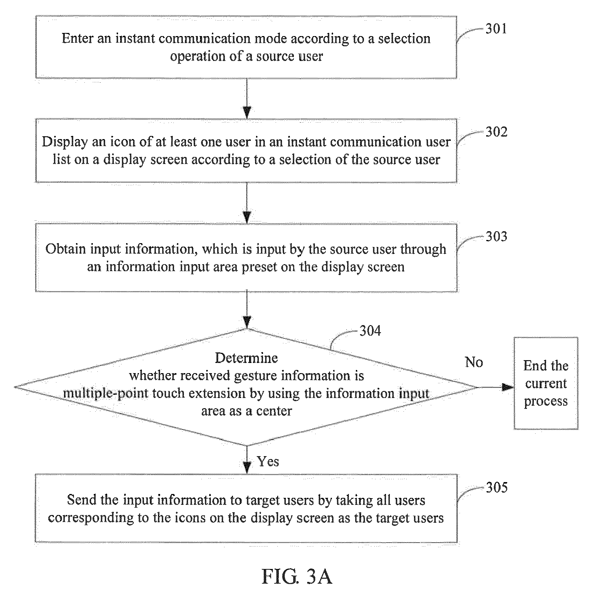

FIG. 3A is a flowchart of a third embodiment of the touch-based method for sending information according to the present invention. This embodiment describes in detail another process of sending information when an instant communication mode is used.

Step 301: Enter an instant communication mode according to a selection operation of a source user.

The source user is a user using a current touch terminal device.

Step 302: Display an icon of at least one user in an instant communication user list on a display screen according to a selection of the source user.

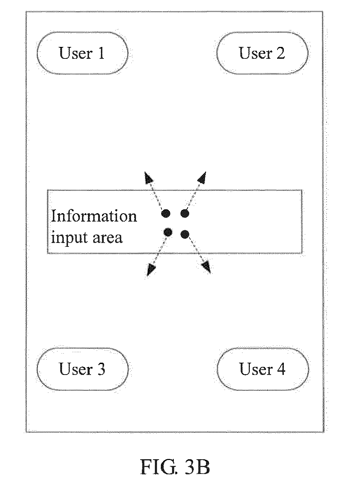

When selecting the instant communication mode, the source user may drag frequently- contacted users to the display screen. For example, as shown in FIG. 3B, four frequently- contacted users are dragged and displayed on the display screen. A User 1, a user 2, a user 3, and a user 4 are displayed in the form of icons respectively on the upper left, upper right, lower left, and lower right of the display screen; or the icons of the frequently- contacted users may also be displayed on one side of the display screen and be arranged from the top down. Further, to keep the interface of the display screen in order, the above user icons may be hidden until the user performs an information sending operation.

Step 303: Obtain input information, which is input by the source user through an information input area preset on the display screen.

In the embodiment of the present invention, an information input area may be set on the display screen. For example, a text box is set in the center of the display screen, as shown in FIG. 3B. The user may perform input operations in the information input area.

Step 304: Determine whether received gesture information is multi-point touch extension by using the information input area as a center; if yes, perform step 305; otherwise, end the current process.

In this embodiment, the multi-point touch extension may be defined as a stretching operation simultaneously on the display screen after the user presses the information input area by using at least two fingers. In this embodiment, it may be preset that when the gesture information is multi-point touch extension, the input information is sent to all users displayed on the display screen.

Step 305: Send the input information to target users by taking all users corresponding to the icons on the display screen as the target users.

As shown in FIG. 3B, it may be assumed that four black points shown in the center part of the information input area are positions tapped by four fingers. When each finger performs a stretching operation simultaneously (in directions shown by the arrows in FIG. 3B) by using the point where the finger is located as a center, the input information is sent to the user 1, the user 2, the user 3, and the user 4 displayed on the display screen.

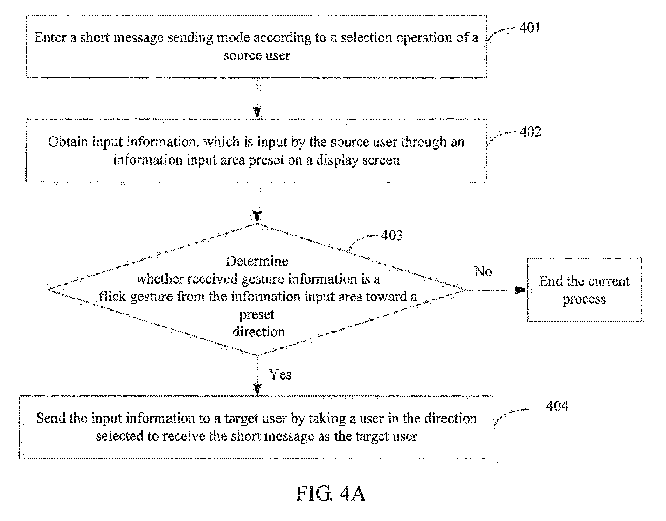

FIG. 4A is a flowchart of a fourth embodiment of the touch-based method for sending information according to the present invention. This embodiment describes in detail a process of sending information when a short message sending mode is used.

Step 401: Enter a short message sending mode according to a selection operation of a source user.

The source user is a user using a current touch terminal device. In this embodiment, after the short message sending mode is selected, the source user normally selects a user in an address book as a target user to which a short message is to be sent, or input a phone number of a target user as a recipient, for example, the user inputs a phone number 13800000001.

Step 402: Obtain input information, which is input by the source user through an information input area preset on a display screen.

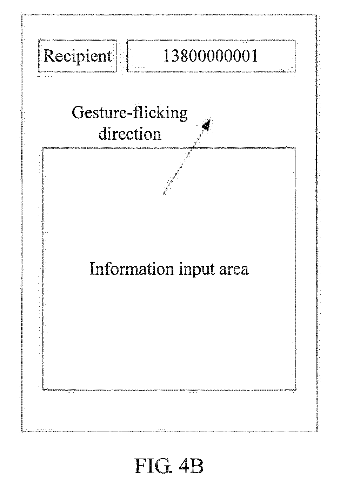

In the short message sending mode, the information input area may be the same as the existing information input area after the short message sending mode is entered, as shown in FIG. 4B.

Step 403: Determine whether received gesture information is a flick gesture from the information input area toward a preset direction; if yes, perform step 404; otherwise, end the current process.

In this embodiment, the flick gesture from the information input area toward the preset direction is defined to trigger the sending of the short message. For example, the flick gesture may be defined to be flicking toward the upper right, and the embodiment of the present invention sets no limitation to the specific definition form.

Step 404: Send the input information to a target user by taking a user in the direction selected to receive the short message as the target user.

As shown in FIG. 4B, assuming that the source user wants to send the short message edited in the information input area, the source user may, after inputting the information, tap any point in the information input area by a finger, and then flick toward the upper right, thereby triggering the terminal to automatically send the short message to the target user whose phone number is 13800000001.

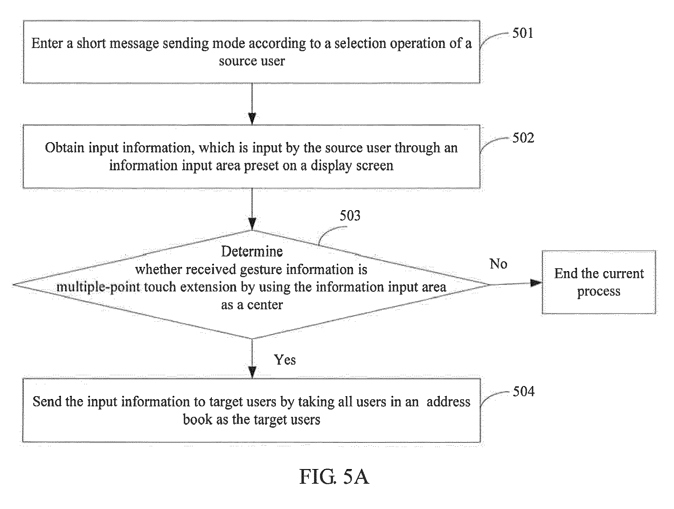

FIG. 5A is a flowchart of a fifth embodiment of the touch-based method for sending information according to the present invention. This embodiment describes in detail another process of sending information when a short message sending mode is used.

Step 501: Enter a short message sending mode according to a selection operation of a source user.

The source user is a user using a current touch terminal device. In the embodiment of the present invention, it is assumed that a touch gesture is used to send a short message to a group of users. Then, after the short message sending mode is selected, the interface for inputting information is directly displayed.

Step 502: Obtain input information, which is input by the source user through an information input area preset on a display screen.

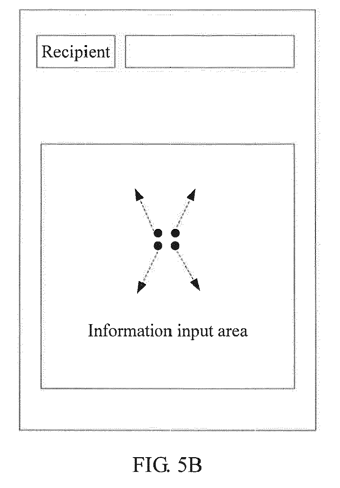

In the short message sending mode, the information input area may be the same as the existing information input area after the short message sending mode is entered, as shown in FIG. 5B.

Step 503: Determine whether received gesture information is multi-point touch extension by using the information input area as a center; if yes, perform step 504; otherwise, end the current process.

In this embodiment, the multi-point touch extension may be defined as a stretching operation simultaneously on the display screen after the user presses the information input area by using at least two fingers. In this embodiment, it may be preset that when the gesture information is multi-point touch extension, the input information is sent to all users in the address book. In another embodiment, the input information does not have to be sent to all users in the address book, for example the input information is sent to at least two users which are preset by the source user in the address book.

Step 504: Send the input information to target users by taking all users in an address book as the target users.

As shown in FIG. 5B, it may be assumed that four black points shown in the center of the information input area are positions tapped by four fingers. When each finger performs a stretching operation simultaneously (in directions shown by the arrows in FIG. 5B) by using the point where the finger is located as a center, the input information is sent to all users in the address book. In another embodiment, the input information is sent to at least two users which are preset by the source user in the address book.

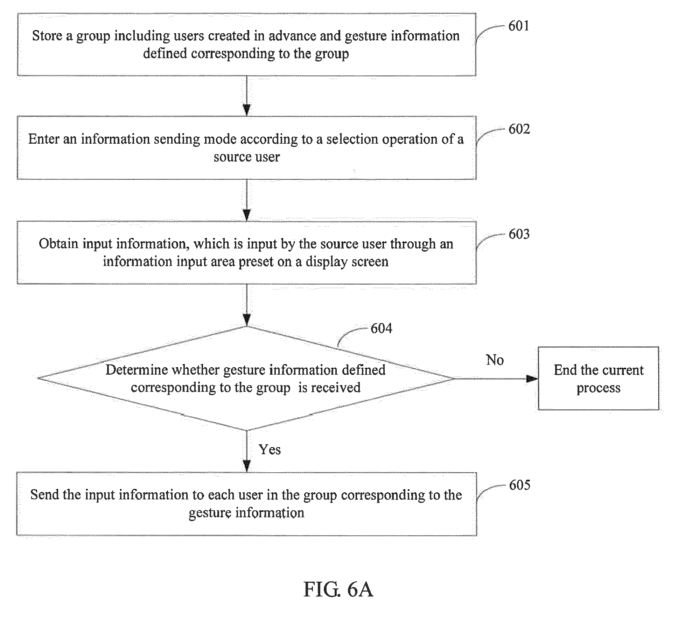

FIG. 6A is a flowchart of a sixth embodiment of the touch-based method for sending information according to the present invention. This embodiment describes in detail the method for sending information when a target user is a group of users.

Step 601: Store a group including users created in advance, and gesture information defined corresponding to the group.

Either the instant communication mode or the short message sending mode has a corresponding contact list which includes several contacts. The contacts may be grouped in advance. For example, a group including relatives may be set, where contacts to be added thereto include relatives such as the father, the mother, an uncle, and an aunt; or a group including colleagues or a group including friends may be set. A gesture corresponding to each group may be stored in advance. For example, a gesture of a circle may correspond to the group including relatives, and a gesture of a triangle may correspond to the group including friends.

Step 602: Enter an information sending mode according to a selection operation of a source user.

This embodiment may be applied in the instant communication mode or the short message sending mode. The following description uses the short message sending mode as an example.

Step 603: Obtain input information, which is input by the source user through an information input area preset on a display screen.

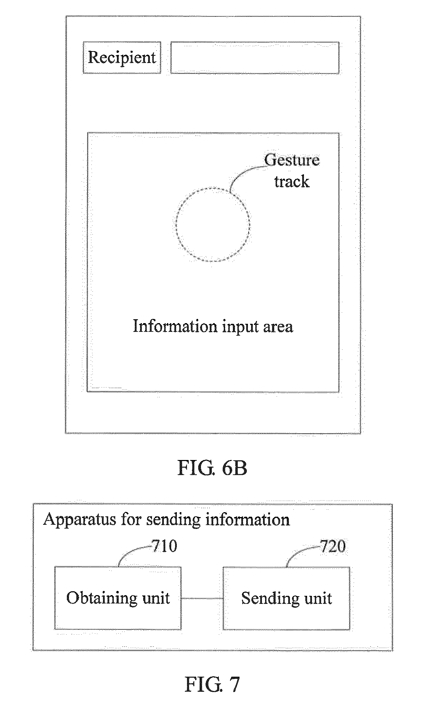

In the short message sending mode, the information input area may be the same as the existing information input area after the short message sending mode is entered, as shown in FIG. 6B.

Step 604: Determine whether the gesture information defined corresponding to the group is received; if yes, perform step 605; otherwise, end the current process.

Step 605: Send the input information to each user in the group corresponding to the gesture information.

As shown in FIG. 6B, in the short message sending mode, if the source user wants to send the input information to all relatives, the source user may, after inputting the information, input a gesture preset corresponding to the groupincluding relatives in the information input area, such as the circle shown in FIG. 6B, thereby triggering the sending of the input information to all users in the group including relatives.

Corresponding to the embodiments of the touch-based method for sending information according to the present invention, the present invention further discloses a touch-based apparatus for sending information.

FIG. 7 is a block diagram of a first embodiment of a touch-based apparatus for sending information according to the present invention.

The apparatus for sending information includes an obtaining unit 710 and a sending unit 720.

The obtaining unit 710 is configured to obtain input information, which is input by a source user through an information input area preset on a display screen.

The sending unit 720 is configured to: when preset gesture information is received, send the input information to a target user corresponding to the gesture information.

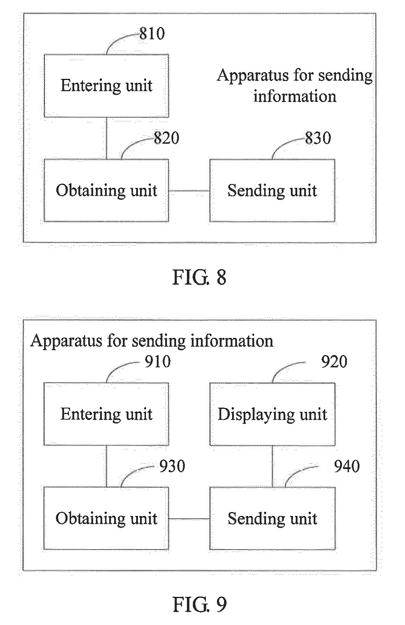

FIG. 8 is a block diagram of a second embodiment of the touch-based apparatus for sending information according to the present invention.

The apparatus for sending information includes an entering unit 810, an obtaining unit 820, and a sending unit 830.

The entering unit 810 is configured to enter an information sending mode according to a selection operation of a source user.

The obtaining unit 820 is configured to obtain input information, which is input by the source user through an information input area preset on a display screen.

The sending unit 830 is configured to: when preset gesture information is received, send the input information to a target user corresponding to the gesture information.

Specifically, the sending unit 830 may include (not shown in FIG. 8):
a third send-executing subunit, configured to: when the information sending mode is a short message sending mode, if the received gesture information is a flick gesture from the information input area toward a preset direction, send the input information to the target user by taking a user in the direction selected to receive a short message as the target user.

Specifically, the sending unit 830 may also include (not shown in FIG. 8):
a fourth send-executing subunit, configured to: when the information sending mode is a short message sending mode, if the received gesture information is multi-point touch extension by using the information input area as a center, send the input information to target users by taking all users in an address book as the target users.

FIG. 9 is a block diagram of a third embodiment of the touch-based apparatus for sending information according to the present invention.

The apparatus for sending information includes an entering unit 910, a displaying unit 920, an obtaining unit 930, and a sending unit 940.

The entering unit 910 is configured to enter an information sending mode according to a selection operation of a source user.

The displaying unit 920 is configured to display, according to a selection of the source user, an icon of at least one user in an instant communication user list on a display screen when the entering unit 910 enters an instant communication mode.

The obtaining unit 930 is configured to obtain input information, which is input by the source user through an information input area preset on the display screen.

The sending unit 940 is configured to: when preset gesture information is received, send the input information to a target user corresponding to the gesture information.

Specifically, the sending unit 940 may include (not shown in FIG. 9):
a first send-executing subunit, configured to: if the received gesture information is a flick gesture from the information input area to an icon of a user, send the input information to the target user by taking a user corresponding to the icon of the user as the target user.

Specifically, the sending unit 940 may also include (not shown in FIG. 9):
a second send-executing subunit, configured to: if the received gesture information is multi-point touch extension by using the information input area as a center, send the input information to target users by taking all users corresponding to the icons on the display screen as the target users.

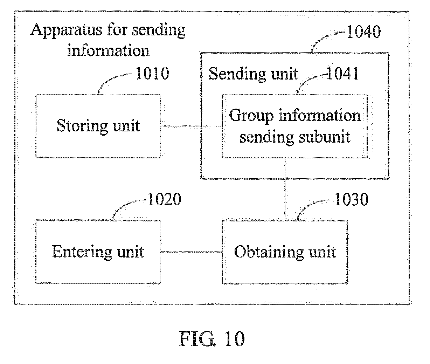

FIG. 10 is a block diagram of a fourth embodiment of the touch-based apparatus for sending information according to the present invention.

The apparatus for sending information includes a storing unit 1010, an entering unit 1020, an obtaining unit 1030, and a sending unit 1040.

The storing unit 1010 is configured to store a group including users created in advance, and gesture information defined corresponding to the group.

The entering unit 1020 is configured to enter an information sending mode according to a selection operation of a source user.

The obtaining unit 1030 is configured to obtain input information, which is input by the source user through an information input area preset on a display screen.

The sending unit 1040 includes a group information sending subunit 1041 configured to send the input information to each user in the group when gesture information defined corresponding to the group is received.

It can be seen from the embodiments that, in the embodiments of the present invention, input information, which is input by a source user through an information input area preset on a display screen, is obtained, and when preset gesture information is received, the input information is sent to a target user corresponding to the gesture information. The embodiments of the present invention improve the existing information sending manner while inputting, and compared with the prior art, when sending information, require no touch or tap operation to select a recipient and send button and the like, but instead, send information quickly by using a preset convenient gesture, thereby improving performance of sending information instantly. In addition, because the preset gesture is convenient for inputting, user experience may be improved when a user sends information on a touch apparatus.

Persons skilled in the art may understand clearly that, the technique of the embodiments of the present invention may be implemented through software and a necessary general hardware platform. Based on such an understanding, the technical solutions in the embodiments of the present invention essentially, or the part contributing to the prior art may be implemented in the form of a software product. The computer software product may be stored in a storage medium, such as a ROM/RAM, a magnetic disk, or an optical disk, and includes several instructions for instructing a computer device (which may be a personal computer, a server, or a network device) to perform the methods described in the embodiments of the present invention or in some parts of the embodiments of the present invention.

Each embodiment in the specification is described in a progressive manner. The same or similar parts in the embodiments are just references to each other. Each embodiment illustrates in emphasis what is different from other embodiments. In particular, for the apparatus embodiments, since they are basically similar to the method embodiments, the apparatus embodiments are described simply, and the relevant part may be obtained with reference to the part of the description of the method embodiments.

The embodiments of the present invention described in the foregoing are not limitations to the protection scope of the present invention. Any modifications, equivalent substitutions and improvements made within the principle of the present invention shall all be included in the protection scope of the present invention.

## Claims

1. A touch-based method for sending information, comprising:
entering an instant communication mode according to a selection operation of a source user;
displaying an icon of at least one user in an instant communication user list on a display screen according to a selection of the source user;
obtaining input information, which is input by the source user through an information input area preset on the display screen; and
sending the input information to target users by taking all users corresponding to the icons on the display screen as the target users when preset gesture information, which is multi-point touch extension by using the information input area as a center, is received.

2. A touch-based apparatus for sending information, comprising:
an entering unit, configured to enter an instant communication mode according to a selection operation of a source user;
a displaying unit, configured to display, according to a selection of the source user, an icon of at least one user in an instant communication user list on a display screen;
an obtaining unit, configured to obtain input information, which is input by the source user through an information input area preset on the display screen; and
a sending unit, configured to: send the input information to target users by taking all users corresponding to the icons on the display screen as the target users when preset gesture information, which is multi-point touch extension by using the information input area as a center, is received.
